# EUROPEAN PATENT APPLICATION

(11) **EP 0 649 818 A1**
(43) Date of publication of application: **26.04.1995**
(21) Application number: 94116575.5
(22) Date of filing: 20.10.1994
(51) Int. Cl.: C01G 53/04

(54) **Method for the preparation of nickel hydroxide particles**

(30) Priority: 20.10.1993 JP 286010/93
(71) Applicant: Nikko Rica Co., Ltd., Tokyo (JP)
(72) Inventor: Makimoto, Kuninobu, Yachiyo-shi, Chiba-ken (JP); Sekimoto, Manabu, Tatebayashi-shi, Gunma-ken (JP); Fujikake, Satoru, Sano-shi, Tochigi-ken (JP); Ishii, Masanori, Ashikaga-shi, Tochigi-ken (JP)
(74) Representative: Raeck, Wilfrid, Dipl.-Ing.

(57) **Abstract**

An improved process for the preparation of nickel hydroxide particles is proposed, by which the nickel hydroxide particles have an outstandingly spherical particle configuration with a relatively narrow particle size distribution to exhibit a high packing density of the particles. The nickel hydroxide particles are produced by the precipitation reaction for which an aqueous solution of a nickel salt, ammonia water and an aqueous solution of a sodium hydroxide are concurrently and continuously introduced into a reaction vessel to form a reaction mixture consisting of the nickel hydroxide particles and aqueous medium, from which the aqueous medium alone is withdrawn either continuously or intermittently so as to accumulate the nickel hydroxide particles in the reaction mixture contained in the reaction mixture resulting in growth of the nickel hydroxide particles to be imparted with desirable particle characteristics.

## Description

### BACKGROUND OF THE INVENTION

The present invention relates to a method for the preparation of particles of nickel hydroxide. More particularly, the invention relates to a method for the preparation of particles of nickel hydroxide having well controlled particle size distribution and exhibiting a high packing density to be suitable for use, for example, in alkali dry cells and the like.

Nickel hydroxide particles to be used in the non-sintered nickel cathode of an alkali dry cell are used in most cases in the form of a paste, by which the metallic pockets of the cathode are filled, as mixed with a pasty electroconductive material. It is desirable in such an application of nickel hydroxide particles that the configuration of the nickel hydroxide particles is spherical or close to a spherical configuration and the particles have a smooth surface with a relatively uniform particle size distribution because the packing density of the nickel hydroxide particles in the cathode pockets can be high enough only with such particles. Nickel hydroxide particles satisfying such requirements are industrially advantageous in order to obtain a high utilization factor and a high discharge rate of the dry cells.

Needless to say, various attempts and proposals have been made with an object to provide a method for the preparation of such nickel hydroxide particles. For example, Japanese Patent Publication 53-6119 and Japanese Patent Kokai 56-143671 and 61-181074 disclose a method for the preparation of nickel hydroxide particles from an aqueous solution of an ammine complex of nickel and an aqueous solution of an alkali metal hydroxide. The nickel hydroxide formed by the precipitation in this method is obtained in a caked form so that disintegration of the cakes into a powder is indispensable before use of the nickel hydroxide powder which, however, has a broad particle size distribution and an irregular particle configuration not to give a high packing density. Further, Japanese Patent Kokai 63-16555 and 63-16556 propose a method for the preparation of nickel hydroxide in which an aqueous solution of a water-soluble nickel salt and an aqueous solution of an alkali metal hydroxide are concurrently and continuously introduced into a reaction vessel each at a specified rate. One of the serious problems in this method is that a stationary state of the reaction system can be established only by taking an unduly long time which sometimes is as long as one month or even larger.

Besides, Japanese Patent Kokai 2-6340 discloses a continuous process in which an aqueous solution of a nickel salt, an aqueous solution of an alkali metal hydroxide and an ammonium ion-supplier are concurrently and continuously introduced into a reaction vessel each at a specified and controlled rate to form a reaction mixture in the reaction vessel, from which the reaction mixture overflows to keep a constant volume of the reaction mixture in the vessel while the reaction proceeds at a controlled temperature of 20 to 80 °C and by keeping the pH value of the reaction mixture in the range from 9 to 12 so that the nickel hydroxide particles produced can be imparted with a spherical particle configuration. This method can proceed satisfactorily only under very delicately controlled process conditions including the balance of the feed rates of the three reactant solutions and the pH value sometimes leading to formation of too fine particles even by a very slight change in the pH so that this method is not practical when industrial production of nickel hydroxide particles exhibiting a high packing density with stability is desired.

### SUMMARY OF THE INVENTION

The present invention accordingly has an object to provide a novel and improved method for the preparation of nickel hydroxide particles having a spherical particle configuration with smooth surface and capable of exhibiting a very high packing density with a relatively uniform particle size distribution

Thus, the method of the present invention for the preparation of nickel hydroxide particles comprises the steps of:
(a1) introducing, into a reaction vessel, an aqueous solution of a water-soluble nickel salt, ammonia water and an aqueous solution of an alkali metal hydroxide concurrently and continuously each at a constant rate to form a reaction mixture consisting of nickel hydroxide particles and an aqueous medium in the reaction vessel;
(b1) withdrawing the aqueous medium of the reaction mixture from the reaction vessel continuously at a constant rate;
(c1) terminating introduction of the aqueous solution of the water-soluble nickel salt, ammonia water and the aqueous solution of the alkali metal hydroxide into the reaction vessel; and
(d1) separating the nickel hydroxide particles from the aqueous medium of the reaction mixture.

In a first particular aspect of the invention, the method of the present invention for the preparation of nickel hydroxide particles comprises the steps of:
(a2) introducing, into a reaction vessel equipped with a filtration means, an aqueous solution of a water-soluble nickel salt, ammonia water and an aqueous solution of an alkali metal hydroxide concurrently and continuously each at a constant rate to form a reaction mixture consisting of nickel hydroxide particles and an aqueous medium in the reaction vessel;
(b2) withdrawing the aqueous medium of the reaction mixture from the reaction vessel continuously at a constant rate by operating the said filtration means so as to keep a substantially constant volume of the reaction mixture under agitation;
(c2) terminating introduction of the aqueous solution of the water-soluble nickel salt, ammonia water and the aqueous solution of the alkali metal hydroxide into the reaction vessel; and
(d2) separating the nickel hydroxide particles from the aqueous medium of the reaction mixture.

In a second particular aspect of the invention, further, the method of the present invention for the preparation of nickel hydroxide particles comprises the steps of:
(a3) introducing, into a reaction vessel, an aqueous solution of a water-soluble nickel salt, ammonia water and an aqueous solution of an alkali metal hydroxide concurrently and continuously each at a constant rate to form a reaction mixture consisting of nickel hydroxide particles and an aqueous medium in the reaction vessel;
(b3) withdrawing the aqueous medium of the reaction mixture from the reaction vessel either after interruption of the introduction of or under continued introduction of the aqueous solution of the water-soluble nickel salt, ammonia water and the aqueous solution of the alkali metal hydroxide into the reaction vessel before the reaction mixture overflows the reaction vessel;
(c3) repeating the cycle consisting of the introduction of the aqueous solution of the water-soluble nickel salt, ammonia water and the aqueous solution of the alkali metal hydroxide into the reaction vessel and withdrawal of the aqueous medium of the reaction mixture from the reaction vessel in substantially the same manner as in steps (a3) and (b3); and
(d3) separating the nickel hydroxide particles from the aqueous medium of the reaction mixture.

It is preferable in each of the above described three aspects of the invention that the rates of introduction of ammonia water and the aqueous solution of the alkali metal hydroxide correspond to 0.2 to 4.0 moles and 1.6 to 2.6 moles, respectively, per mole of the water-soluble nickel salt.

Further, it is preferable in each of the above described three aspects of the invention that introduction of the aqueous solution of the water-soluble nickel salt into the reaction vessel is accompanied by introduction of an aqueous solution of a water-soluble salt of a metal selected from the group consisting of cobalt, cadmium, zinc, lithium and barium.

### DETAILED DESCRIPTION OF THE PREFERRED EMBODIMENTS

As is described above, the basic scope of the present invention consists in that an aqueous solution of a water-soluble nickel salt, ammonia water and an aqueous solution of an alkali metal hydroxide are concurrently and continuously introduced into a reaction vessel to form a reaction mixture consisting of nickel hydroxide and an aqueous medium while the aqueous medium is withdrawn from the reaction vessel and, when a predetermined amount of each of the feed liquids has been introduced into the vessel, introduction of the feed liquids is terminated followed by separation of the nickel hydroxide particles from the reaction mixture. In the first aspect of the invention, in particular, the volume of the reaction mixture in the reaction vessel is kept approximately constant by the balance of the rate of introduction of the feed liquids and the rate of withdrawal of the aqueous medium. In the second aspect of the invention, the aqueous medium is withdrawn either intermittently or repeatedly.

The nickel salt used in the inventive method is not particularly limitative provided that the salt is soluble in water including nickel sulfate, nickel nitrate, nickel chloride and the like. The nickel salt is dissolved in water usually in a concentration of from 0.5 to 3.5 moles per liter to give an aqueous solution to be introduced into the reaction vessel.

The ammonia water introduced into the reaction vessel concurrently with the aqueous solution of the nickel salt has a concentration usually in the range from 0.5 to 20 moles per liter. The ammonia water and the aqueous solution of the nickel salt are introduced into the reaction vessel either separately but concurrently or as a mixture prepared beforehand in a specified proportion.

The third feed liquid introduced into the reaction vessel concurrently with the aqueous solution of the nickel salt and ammonia water is an aqueous solution of an alkali metal hydroxide which can be sodium hydroxide or potassium hydroxide. The aqueous solution of the alkali metal hydroxide has a concentration usually in the range from 2 to 18 moles per liter.

In the method of the present invention, the above described three aqueous solutions, i.e. aqueous solution of the nickel salt, ammonia water and aqueous solution of an alkali metal hydroxide, are concurrently introduced into the reaction vessel by keeping a specified ratio of the rates of introduction. In particular, the ammonia water and aqueous solution of the alkali metal hydroxide are introduced into the vessel at such rates that the rates of introduction of ammonia and the alkali metal hydroxide are in the ranges of from 0.2 to 4.0 moles and from 1.6 to 2.6 moles, respectively, per mole of the nickel salt introduced in the form of an aqueous solution. When the rate of introduction of ammonia water is too low, full growth of the nickel hydroxide particles cannot be obtained while no particular additional advantages are obtained even by increasing the rate of introduction of ammonia water to exceed the above mentioned upper limit rather with an economical disadvantage. When the rate of introduction of the aqueous solution of the alkali metal hydroxide is too low, a substantial amount of the nickel salt is left unreacted to cause an economical disadvantage due to a decrease in the yield while the growth of the nickel hydroxide particles is inhibited more or less when the rate of introduction of the aqueous solution of the alkali metal hydroxide is too high. Introduction of these feed solutions into the reaction vessel is performed at a temperature in the range from 20 to 80 °C under intense agitation of the reaction mixture in the vessel. No particular control of the pH value of the reaction mixture is required.

In the first aspect of the inventive method, it is important that the volume of the reaction mixture in the reaction vessel is kept approximately constant by the balance of the continuous introduction of the feed solutions thereinto and continuous withdrawal of the aqueous medium of the reaction mixture by operating the filtration means provided in the reaction vessel *per se*. Control of the volume of the reaction mixture is performed by the withdrawal of the aqueous medium alone filtered through a filtering material so as not to cause overflow of the reaction mixture. When the filtering efficiency through the filtering material is decreased, the filtering efficiency can be regained by conducting back-blowing with an inert gas. It is preferable that the above described procedure of the inventive method is conducted under agitation at a constant temperature in the range from 20 to 80 °C. For example, nickel hydroxide particles of 3 to 50 µm particle diameter having a practically desirable spherical or oval particle configuration and containing substantially no ungrown particles can be obtained by conducting the reaction by keeping the reaction temperature at about 50 °C.

While the withdrawal of the aqueous medium of the reaction mixture from the reaction vessel is conducted through a filtering material, it is important that the filtering material is resistant against alkaline medium. Suitable filtering materials include filter cloths of woven or non-woven fabrics made of synthetic fibers or hollow yarns such as those of polyethylene, polypropylene and the like. The filtering material should have a mesh opening depending on the desired particle size of the nickel hydroxide product, usually, in the nominal range not exceeding 3 to 5 µm although the mesh opening can be somewhat larger in the filtering materials used in all industrial production. When a filtering material of which the nominal mesh opening is too large is used, some of the grown nickel hydroxide particles suitable to be contained in the product are removed as carried by the aqueous medium resulting in a decrease in the productivity of the process while, when the mesh opening is too small, working efficiency is decreased due to eventual clogging of the filtering material by fine particles.

The aqueous medium of the reaction mixture is obtained by spontaneous filtration or sucking filtration of the reaction mixture in the reaction vessel in direct contact with the filtering material. For example, a discharge port covered with the filtering material is provided on the wall of the reaction vessel or a suction conduit or pipe having a nozzle covered with a filtering material is inserted into the reaction mixture in the reaction vessel and the aqueous medium is withdrawn by suction through the duct connected to a sucking apparatus. When the filtering material has a sufficiently large area available for filtration, it is usual that withdrawal of the aqueous medium can be continued without undertaking back-blowing of the filtering material although back-blowing of the filtering material should be undertaken in order to regain the efficiency of filtration when the adequate rate of withdrawal of the aqueous medium can no longer be maintained to cause an undue increase in the volume of the reaction mixture held in the reaction vessel due to clogging of the meshes in the filtering material. It is advantageous in the method of the invention that the filtering material which should serve for sucking filtration or back-blowing is provided with a reinforcing net in order to avoid eventual break or rupture of the filtering material because filtering materials are usually not strong enough to withstand the pressure difference caused by suction or back-blowing. The fashion by which the reinforcing net is mounted on the filtering material is not particularly limitative. One of such reinforced filtering elements suitable for use in the inventive method is a so-called leaf filter consisting of a framework made of a metal or a synthetic resin on which a wire net is mounted as covered with a filter cloth. The volume of the reaction mixture in the reaction vessel can be maintained approximately constant automatically and efficiently by means of an automation system having a liquid-level sensor generating feedback signals to a controller which operates the electromagnetic valves for the filtration and back-blowing lines.

The above mentioned back-blowing for the regeneration of the filtering material is conducted by pressurizing the suction duct from the suction side for a short time with an inert gas which is ejected into the reaction mixture to blow off the nickel hydroxide particles captured in the mesh openings of the filtering material to cause clogging thereof. The back-blowing for the regeneration of the filtering material can be repeated according to need. The length of time taken for a single back-blowing operation usually does not exceed several seconds. The gas used for the back-blowing is required to be inert or not reactive with the nickel salt and the alkali. Suitable inert gases include nitrogen and argon although air can be used advantageously when freed from carbon dioxide contained therein.

In the second aspect of the invention, it is important that an aqueous solution of a water-soluble nickel salt, ammonia water and an aqueous solution of an alkali metal hydroxide are introduced into the reaction vessel each at a constant rate and the cycle consisting of an increase in the volume of the reaction mixture by the introduction of the feed liquids and a decrease in the volume of the reaction mixture by the withdrawal of the aqueous medium is repeated. The withdrawal of the aqueous medium from the reaction vessel can be started at any moment before the reaction mixture overflows the vessel by the increase of the volume and should be interrupted before the volume of the reaction mixture in the reaction is decreased to such a level that stable agitation of the reaction mixture can no longer be continued.

The particular procedure for the withdrawal of the aqueous medium in the above mentioned second aspect of the invention is as follows. Thus, introduction of the feed liquids into the reaction vessel is interrupted before the reaction mixture overflows the reaction vessel due to increase in the volume along with interruption or great slowing-down of agitation so as to cause settling of the nickel hydroxide particles formed in the reaction mixture and the aqueous medium of the reaction mixture as the supernatant is discharged out of the vessel until the volume of the reaction mixture in the vessel is decreased to such a level that stable agitation of the reaction mixture can still be continued. Thereafter, introduction of the feed liquids is resumed to again increase the volume of the reaction mixture and interrupted before overflow of the reaction mixture takes place followed by the withdrawal of the aqueous medium in the same manner as before. This cycle of introduction of the feed liquids and withdrawal of the aqueous medium is repeated until a sufficient amount of the nickel hydroxide particles is accumulated in the reaction vessel. Alternatively, withdrawal of the aqueous medium can be performed, without interrupting introduction of the feed liquids, at such a rate that the volume of the reaction mixture in the vessel is gradually decreased and then turned to increase by interrupting or slowing-down of the withdrawal of the aqueous medium while withdrawal of the aqueous medium is resumed before overflow of the reaction mixture takes place. This cycle is repeated until accumulation of a sufficient amount of nickel hydroxide particles in the reaction vessel.

In each of the first and second aspects of the inventive method, nickel hydroxide particles formed by the reaction are gradually accumulated in the reaction vessel so that the resistance to the stirrer against agitation of the reaction mixture is gradually increased and the reaction must be terminated before the consistency of the reaction mixture becomes so high as not to allow continued agitation of the reaction mixture. In this batch-wise process according to the invention, the amount of the nickel salt introduce ed into the reaction vessel during a single run is in the range from 2 moles to 20 moles per liter of the capacity of the reaction vessel though dependent on various factors including the desired particle size of the product and selected reaction conditions. Extension of the one-run time to such an extent that the overall feed amount of the nickel salt exceeds the above mentioned upper limit is undesirable because an adverse effect is caused on the uniformity of the nickel hydroxide particles due to the difficulty in agitation. Too early termination of a run is of cause disadvantageous in respect of the the decrease in the productivity of the process. The length of time taken for a single run of the process is usually in the range from 2 hours to 30 hours though not particularly limitative thereto. When the duration of a single run is too short or when the feed solutions are introduced at excessively high rates, the quality of the nickel hydroxide product cannot be high enough in respect of the packing density of the particles. A too long duration of a single run is of course undesirable due to a decrease in the productivity of the process.

When a run of the process according to the invention is started, it is advantageous that the reaction vessel is charged, before introduction of an aqueous solution of the nickel salt, with a suitable volume of water or, preferably, an aqueous solution containing an alkali, ammonia or an alkali metal salt in a concentration not exceeding 3 moles per liter as a pre-feed solution in such a volume that from 20% to 99% of the capacity of the reaction vessel is occupied by the pre-feed water or solution. The aqueous medium withdrawn from the reaction mixture in the preceding run can be used advantageously as the pre-feed solution.

As is mentioned before, the nickel hydroxide particles obtained by the inventive method have an average particle diameter of 3 to 50 µm and an appropriate particle size distribution and the particles each have a spherical or oval configuration. The tap density of the particles can be as high as 1.9 to 2.2 g/ml. The average particle diameter and the particle size distribution can be controled in a wide range by adequately selecting the reaction conditions such as the feed rates of the starting solutions, intensity of agitation and the like according to desire. Advantageously, the productivity of the process according to the invention is much higher than in the conventional processes because the time taken for a run is much shorter. For example, the yield of the nickel hydroxide particles can be as high as 0.1 to 2 kg per run per liter of the capacity of the reaction vessel according to the first aspect of the invention to provide an up to 15 times improvement in the yield as compared with the process disclosed in Japanese Patent Kokai 3-252318 involving overflowing of the reaction mixture for the preparation of nickel hydroxide particles of high packing density for the same capacity of the reaction vessel and for the same duration of a run.

It is of course possible to produce nickel hydroxide particles doped with a hydroxide of other metals such as cobalt, zinc, cadmium, barium, lithium and the like as required in specific applications by the introduction of an aqueous solution of a salt of these metals concurrently with or as mixed with the aqueous solution of the nickel salt.

In summary, the method of the invention is industrially very advantageous because a very efficient method is provided thereby for the preparation of nickel hydroxide particles of a spherical particle configuration having a relatively narrow particle size distribution without containing ungrown fine particles to be suitable for use in a non-sintered nickel cathode of alkali dry cells.

In the following, examples and comparative examples are given to illustrate the inventive method in more detail.

### Example 1.

Into a reaction vessel of 500 ml capacity charged with 250 ml of water was inserted a filter pipe having an inner diameter of about 10 mm and covered at the nozzle opening with a filter cloth of polypropylene fibers having a nominal mesh opening of 3 to 5 µm to give an effective filtering area of about 4 cm² and the water in the vessel was heated at 50 °C . While agitating the water in the vessel at this temperature, an aqueous solution of nickel sulfate of a 2 moles/liter concentration, ammonia water of a 15 moles/liter concentration and an aqueous solution of sodium hydroxide of a 6 moles/liter concentration were concurrently and continuously introduced into the reaction vessel at rates of 1.85 ml/minute, 0.62 ml/minute and 1.20 ml/minute, respectively, to form a reaction mixture. When the volume of the reaction mixture in the vessel reached 400 ml, withdrawal of the aqueous medium of the reaction mixture was started and continued by suction through the filter pipe at such a rate that the volume of the reaction mixture in the vessel could be maintained substantially constant at 400 ml throughout. After about 18 hours of running in this way when the total volume of the aqueous solution of nickel sulfate introduced to the vessel reached 2 liters, introduction of the feed solutions and withdrawal of the aqueous medium was terminated.

It was noted in this running that the efficiency of filtration through the filter pipe to withdraw the aqueous medium was decreased after about 10 hours from the start of running resulting in an increase in the volume of the reaction mixture held in the reaction vessel to exceed 400 ml so that back-blowing of the filter pipe disconnected from the suction line was undertaken for 5 seconds to regenerate the filter cloth with nitrogen gas which was ejected into the reaction mixture to blow off the nickel hydroxide particles captured in the filter cloth to cause clogging. Thereafter, the same back-blowing treatment was repeated approximately in every 10 minutes. After termination of introduction of the feed solutions and withdrawal of the aqueous medium, the reaction mixture was filtered to collect the precipitates of nickel hydroxide followed by washing thereof with water and drying to give 0.38 kg of a dried nickel hydroxide powder, of which all of the particles had spherical or approximately spherical configuration with an average particle diameter of about 17.8 µm. The tap density of the powder was 1.93 g/ml.

### Example 2.

A filter pipe similar to that used in Example 1 and having a filtration area of 16 cm² was inserted into a reaction vessel of 1 liter capacity containing 600 ml of the aqueous solution obtained in Example 1 as the aqueous medium withdrawn from the reaction mixture as a pre-feed solution. An aqueous solution containing nickel sulfate, cobalt sulfate and zinc sulfate in concentrations of 2 moles/liter, 0.05 mole/liter and 0.1 mole/liter, respectively, ammonia water of a 15 moles/liter concentration and an aqueous solution of sodium hydroxide of a 6 moles/liter concentration were concurrently and continuously introduced into the reaction vessel at rates of 15.0 ml/minute, 4.5 ml/minute and 10.75 ml/minute, respectively, to form a reaction mixture which was kept at 50 °C under agitation. When the volume of the reaction mixture in the vessel reached 700 ml after 3 minutes from the start of introduction of the feed solutions, withdrawal of the aqueous medium by suction through the filter pipe was started and continued at such a rate that the volume of the reaction mixture in the vessel was maintained substantially constant. Back-blowing of the filter pipe was undertaken in every 10 minutes each time for about 5 seconds in about the same manner as in Example 1.

After about 5.5 hours of running from the start of the run when the total volume of the metal sulfate solution introduced into the reaction vessel reached 5 liters, introduction of the feed solutions and withdrawal of the aqueous medium were terminated and the reaction mixture was filtered to collect precipitates of nickel hydroxide followed by washing thereof with water and drying to give 1 kg of a nickel hydroxide powder having an average particle diameter of 11.5 µm, of which the particles had a substantially spherical configuration. The tap density of the powder was 2.10 g/ml and the powder could be handled without difficulties;

### Example 3.

The same reaction vessel as used in Example 2 was charged with 600 ml of an aqueous solution containing sodium hydroxide, ammonia and sodium sulfate in concentrations of 0.07 mole/liter, 1.5 moles/liter and 0.4 mole/liter, respectively, as a pre-feed solution. An aqueous solution containing nickel sulfate, cobalt sulfate and ammonia in concentrations of 2 moles/liter, 0.05 mole/liter and 4.0 mole/liter, respectively, an aqueous solution containing zinc sulfate and ammonia in concentrations of 1 mole/liter and 5.0 moles/liter, respectively, and an aqueous solution of sodium hydroxide of a 6 moles/liter concentration were concurrently and continuously introduced into the reaction vessel at rates of 15.0 ml/minute, 1.5 ml/minute and 11.1 ml/minute, respectively, to form a reaction mixture which was kept at 50 °C under agitation. When the volume of the reaction mixture in the vessel reached 700 ml after 3 minutes running from the start of introduction of the feed solutions, withdrawal of the aqueous medium by suction through the filter pipe was started and continued at such a rate that the volume of the reaction mixture in the vessel was maintained substantially constant. Back-blowing of the filter pipe was undertaken in every 10 minutes each time for about 5 seconds in about the same manner as in Example 1.

When the total volume of the nickel sulfate-containing aqueous solution introduced into the reaction vessel reached 5 liters, introduction of the feed solutions and withdrawal of the aqueous medium were terminated and the reaction mixture was filtered to collect precipitates of nickel hydroxide followed by washing thereof with water and drying to give 1 kg of a nickel hydroxide powder having an average particle diameter of 10.5 µm, of which the particles had a substantially spherical configuration or a configuration close to spherical. The tap density of the powder was 2.12 g/ml and the powder could be handled without difficulties.

### Example 4.

The experimental procedure was substantially the same as in Example 3 described above except that the filtration area of the filter pipe was increased to 60 cm² so that the reaction run could be performed without undertaking the back-blowing treatment of the filter pipe. When the total volume of the nickel sulfate-containing aqueous solution introduced into the reaction vessel reached 5 liters, introduction of the feed solutions and withdrawal of the aqueous medium were terminated and the reaction mixture was filtered to collect precipitates of nickel hydroxide followed by washing thereof with water and drying to give 1 kg of a nickel hydroxide powder having an average particle diameter of 10.2 µm, of which the particles had a substantially spherical configuration or a configuration close to spherical. The tap density of the powder was 2.08 g/ml and the powder could be handled without difficulties.

### Example 5.

A filter pipe communicating with a suction line and covered at the nozzle opening with a porous hollow yarn membrane of polyethylene having a nominal mesh opening of 0.15 µm to give 4 m² of the filtration area was inserted into a reaction vessel of 30 liters capacity containing 18 liters of the same pre-feed solution as used in Example 3 which was heated and kept at 50 °C. An aqueous solution containing nickel sulfate, cobalt sulfate and ammonia in concentrations of 1.5 moles/liter, 0.0375 mole/liter and 3.0 moles/liter, respectively, an aqueous solution containing zinc sulfate and ammonia in concentrations of 0.75 mole/liter and 5.0 moles/liter, respectively, and an aqueous solution of sodium hydroxide of a 6 moles/liter concentration were concurrently and continuously introduced into the reaction vessel at rates of 1.5 liters/minute, 0.15 liter/minute and 0.86 liter/minute, respectively, to form a reaction mixture which was kept at 50 °C under agitation. Starting at a moment after 1 minute from the beginning of introduction of the feed solutions, withdrawal of the aqueous medium was performed through the filter pipe, of which the hollow yarn filter membrane was subjected to regeneration by back-blowing in every 10 minutes each time for 5 seconds.

After 2.3 hours of running in this manner when the total volume of the nickel sulfate-containing aqueous solution introduced into the reaction vessel reached 210 liters, introduction of the feed solutions and withdrawal of the aqueous medium were terminated along with termination of agitation and heating of the reaction mixture and the reaction mixture was filtered to collect precipitates of nickel hydroxide followed by washing thereof with water and drying to give 31.5 kg of a nickel hydroxide powder having an average particle diameter of 10.8 µm, of which the particles had a substantially spherical configuration or an oval configuration close to spherical. The tap density of the powder was 2.00 g/ml.

### Comparative Example 1.

The experimental procedure was substantially the same as in Example 3 except that, instead of using a filter pipe provided with a filtering material, the reaction mixture per se containing the nickel hydroxide particles was withdrawn through a discharge pipe at such a rate that the volume of the reaction mixture in the vessel was kept approximately constant. When the total volume of the nickel sulfate-containing aqueous solution introduced into the reaction vessel reached 5 liters, introduction of the feed solutions and withdrawal of the reaction mixture were terminated and the reaction mixture was filtered to collect precipitates of nickel hydroxide followed by washing thereof with water and drying to give 0.12 kg of a nickel hydroxide powder having an average particle diameter of 9.7 µm. Although the particles had a substantially spherical configuration or an oval configuration close to spherical, the tap density of the powder was only 1.25 g/ml.

### Example 6.

A reaction vessel of 1 liter capacity was charged with 400 ml of water which was heated at 50 °C under agitation. An aqueous solution of nickel sulfate of 2 moles/liter concentration, ammonia water of 15 moles/liter concentration and an aqueous solution of sodium hydroxide of 6 moles/liter concentration were concurrently and continuously introduced into the reaction vessel at rates of 1.85 ml/minute, 0.62 ml/minute and 1.20 ml/minute, respectively, to form a reaction mixture therein until the volume of the reaction mixture reached 800 ml when introduction of the feed solutions and agitation of the reaction mixture were interrupted so as to cause spontaneous settling of the nickel hydroxide particles in the reaction mixture followed by discharge of a part of the supernatant so as to reduce the volume of the reaction mixture to 400 ml. While agitating the reaction mixture left in the reaction vessel, introduction of the same feed solutions as above was resumed into the reaction vessel at the same rates as above until the volume of the reaction mixture in the vessel again reached 800 ml when introduction of the feed solutions and agitation of the reaction mixture were interrupted to cause settling of the nickel hydroxide particles followed by partial discharge of the supernatant to reduce the volume of the reaction mixture to 400 ml. After 8 times repetition of the cycle consisting of introduction of the feed solutions and partial discharge of the supernatant in the above described manner, final introduction of the feed solutions was undertaken to make up 800 ml volume of the reaction mixture to terminate the batch-wise run after 20 hours of running. The total volume of the aqueous nickel sulfate solution introduced into the reaction vessel was 2 liters.

The reaction mixture was filtered to collect precipitates of nickel hydroxide followed by washing thereof with water and drying to give 0.38 kg of a dried nickel hydroxide powder having an average particle diameter of 9.5 µm, of which the particles had a spherical or oval configuration. The powder had a tap density of 2.09 g/ml and could be handled without difficulties.

### Example 7.

A reaction vessel of 3 liters capacity was charged with 600 ml of an aqueous solution containing sodium hydroxide, ammonia and sodium sulfate in concentrations of 0.07 mole/liter, 1.5 moles/liter and 0.4 mole/liter, respectively, as a pre-feed solution which was heated at 50 °C. An aqueous solution containing nickel sulfate, cobalt sulfate and ammonia in concentrations of 2 moles/liter, 0.05 mole/liter and 4.0 mole/liter, respectively, an aqueous solution containing zinc sulfate and ammonia in concentrations of 1 mole/liter and 5.0 moles/liter, respectively, and an aqueous solution of sodium hydroxide of 6 moles/liter concentration were concurrently and continuously introduced into the reaction vessel at rates of 15.0 ml/minute, 1.5 ml/minute and 11.1 ml/minute, respectively, to form a reaction mixture which was kept at 50 °C under agitation. When the increasing volume of the reaction mixture in the vessel reached 2.5 liters, introduction of the feed solutions was interrupted along with great slowing-down of agitation so as to cause settling of the precipitates of nickel hydroxide in the reaction mixture followed by discharge of a part of the supernatant until the volume of the reaction mixture left in the reaction vessel was reduced to about 0.6 liter. Thereafter, introduction of the feed solutions was resumed at the same rates as above until the volume of the reaction mixture in the reaction vessel reached 2.5 liters followed by settling of the precipitates and partial discharge of the supernatant to reduce the volume of the reaction mixture in the vessel to 0.6 liter. This cycle consisting of introduction of the feed solutions and partial discharge of the supernatant was repeated four times followed by final introduction of the feed solutions to make up a 2.5 liters volume of the reaction mixture to complete the run taking about 7 hours. The total volume of the nickel sulfate-containing solution introduced into the reaction vessel during the run was 5.2 liters.

The reaction mixture was filtered to collect precipitates of nickel hydroxide followed by washing thereof with water and drying to give 1.00 kg of a dried nickel hydroxide powder having an average particle diameter of 10.5 µm, of which the particles had a substantially spherical configuration or a configuration close to spherical. The tap density of the powder was 2.02 g/ml.

### Example 8.

A reaction vessel of 5 liters capacity was charged with 1 liter of the aqueous solution obtained in Example 7 as the aqueous medium of the reaction mixture by withdrawing therefrom as a pre-feed solution which was kept at about 50 °C under agitation. The same feed solutions as in Example 7 were introduced concurrently and continuously into the reaction vessel each at the same rate as in Example 7 to form a reaction mixture. When the increasing volume of the reaction mixture in the reaction vessel reached 4.5 liters, withdrawal of the aqueous medium of the reaction mixture was started and continued, without interrupting introduction of the feed solutions and agitation, through a filter pipe communicating with a suction line and covered at the nozzle opening with a filter cloth of polypropylene fibers having a nominal mesh opening of 3 µm at such a rate that the volume of the reaction mixture in the reaction vessel was gradually decreased. When the volume of the reaction mixture in the reaction vessel was decreased to 1 liter, withdrawal of the aqueous medium was interrupted and introduction of the feed solutions was resumed and continued until the volume of the reaction mixture was again increased to 4.5 liters. Thereafter, withdrawal of the aqueous medium from the reaction mixture was resumed and continued until the volume of the reaction mixture was decreased to 1 liter and terminated followed by the final introduction of the feed solutions until the total volume of the nickel sulfate solution introduced into the reaction vessel reached 5 liters to complete the run including twice of the withdrawal period.

The reaction mixture was filtered to collect precipitates of nickel hydroxide followed by washing thereof with water and drying to give 1 kg of a dried nickel hydroxide powder having an average particle diameter of 11.6 µm, of which the particles had a substantially spherical or oval configuration. The tap density of the powder was 1.96 g/ml and the powder could be handled without difficulties.

### Comparative Example 2.

The conditions of the run were about the same as in Example 7 except that, instead of the withdrawal of the aqueous medium alone of the reaction mixture, the reaction mixture *per se* containing the precipitates of nickel hydroxide was withdrawn by alternately resuming introduction of the feed solutions and withdrawal of the reaction mixture in such a way that the maximum volume and minimum volume of the reaction mixture in the reaction vessel were 2.5 liters and 0.6 liter, respectively. The run was completed when the total volume of the nickel sulfate-containing solution introduced into the reaction vessel reached 5.2 liters.

The reaction mixture was filtered to collect precipitates of nickel hydroxide followed by washing thereof with water and drying to give 0.2 kg of a dried nickel hydroxide powder having an average particle diameter of 9.8 µm and a tap density of 1.38 g/ml. The portion of the reaction mixture withdrawn from the reaction vessel during the run contained 0.8 kg of nickel hydroxide particles as a total having an average particle diameter of 9.6 µm and a tap density of 1.35 g/ml although the particles had a spherical or oval configuration.

## Claims

1. A method for the preparation of nickel hydroxide particles which comprises the steps of:
(a1) introducing, into a reaction vessel, an aqueous solution of a water-soluble nickel salt, ammonia water and an aqueous solution of an alkali metal hydroxide concurrently and continuously each at a constant rate to form a reaction mixture consisting of nickel hydroxide particles and an aqueous medium in the reaction vessel;
(b1) withdrawing the aqueous medium of the reaction mixture from the reaction vessel continuously at a constant rate;
(c1) terminating introduction of the aqueous solution of the water-soluble nickel salt, ammonia water and the aqueous solution of the alkali metal hydroxide into the reaction vessel; and
(d1) separating the nickel hydroxide particles from the aqueous medium of the reaction mixture.

2. A method for the preparation of nickel hydroxide particles which comprises the steps of:
(a2) introducing, into a reaction vessel equipped with a filtration means, an aqueous solution of a water-soluble nickel salt, ammonia water and an aqueous solution of an alkali metal hydroxide concurrently and continuously each at a constant rate to form a reaction mixture consisting of nickel hydroxide particles and an aqueous medium in the reaction vessel;
(b2) withdrawing the aqueous medium of the reaction mixture from the reaction vessel continuously at a constant rate by operating the said filtration means so as to keep a substantially constant volume of the reaction mixture under agitation;
(c2) terminating introduction of the aqueous solution of the water-soluble nickel salt, ammonia water and the aqueous solution of the alkali metal hydroxide into the reaction vessel; and
(d2) separating the nickel hydroxide particles from the aqueous medium of the reaction mixture.

3. A method for the preparation of nickel hydroxide particles which comprises the steps of:
(a3) introducing, into a reaction vessel, an aqueous solution of a water-soluble nickel salt, ammonia water and an aqueous solution of an alkali metal hydroxide concurrently and continuously each at a constant rate to form a reaction mixture consisting of nickel hydroxide particles and an aqueous medium in the reaction vessel;
(b3) withdrawing the aqueous medium of the reaction mixture from the reaction vessel either after interruption of introduction of or under continued introduction of the aqueous solution of the water-soluble nickel salt, ammonia water and the aqueous solution of the alkali metal hydroxide into the reaction vessel before the reaction mixture overflows the reaction vessel;
(c3) repeating the cycle consisting of introduction of the aqueous solution of the water-soluble nickel salt, ammonia water and the aqueous solution of the alkali metal hydroxide into the reaction vessel and withdrawal of the aqueous medium of the reaction mixture from the reaction vessel; and
(d3) separating the nickel hydroxide particles from the aqueous medium of the reaction mixture.

4. The method for the preparation of nickel hydroxide particles as claimed in claim 2 in which the rates of introduction of ammonia water and the aqueous solution of the alkali metal hydroxide correspond to 0.2 to 4.0 moles of ammonia and 1.6 to 2.6 moles of the alkali metal hydroxide, respectively, per mole of the water-soluble nickel salt.

5. The method for the preparation of nickel hydroxide particles as claimed in claim 3 in which the rates of introduction of ammonia water and the aqueous solution of the alkali metal hydroxide correspond to 0.2 to 4.0 moles of ammonia and 1.6 to 2.6 moles of the alkali metal hydroxide, respectively, per mole of the water-soluble nickel salt.

6. The method for the preparation of nickel hydroxide particles as claimed in claim 2 in which the concentration of the water-soluble nickel salt in the aqueous solution introduced into the reaction vessel is in the range from 0.5 to 3.5 moles per liter.

7. The method for the preparation of nickel hydroxide particles as claimed in claim 3 in which the concentration of the water-soluble nickel salt in the aqueous solution introduced into the reaction vessel is in the range from 0.5 to 3.5 moles per liter.

8. The method for the preparation of nickel hydroxide particles as claimed in claim 2 in which the concentration of ammonia in the ammonia water introduced into the reaction vessel is in the range from 0.5 to 20 moles per liter.

9. The method for the preparation of nickel hydroxide particles as claimed in claim 3 in which the concentration of ammonia in the ammonia water introduced into the reaction vessel is in the range from 0.5 to 20 moles per liter.

10. The method for the preparation of nickel hydroxide particles as claimed in claim 2 in which the concentration of the alkali metal hydroxide in the aqueous solution introduced into the reaction vessel is in the range from 2 to 18 moles per liter.

11. The method for the preparation of nickel hydroxide particles as claimed in claim 3 in which the concentration of the alkali metal hydroxide in the aqueous solution introduced into the reaction vessel is in the range from 2 to 18 moles per liter.

12. The method for the preparation of nickel hydroxide particles as claimed in claim 2 in which the total amount of the water-soluble nickel salt introduced into the reaction vessel in a run is in the range from 2 to 20 moles per liter of the capacity of the reaction vessel.

13. The method for the preparation of nickel hydroxide particles as claimed in claim 3 in which the total amount of the water-soluble nickel salt introduced into the reaction vessel in a run is in the range from 2 to 20 moles per liter of the capacity of the reaction vessel.
